# EUROPÄISCHE PATENTSCHRIFT

(11) **EP 0 538 863 B1**
(45) Veröffentlichungstag und Bekanntmachung des Hinweises auf die Patenterteilung: **27.12.1995**
(21) Anmeldenummer: 92118105.3
(22) Anmeldetag: 22.10.1992
(51) Int. Cl.: B60R 21/26, F42B 3/04

(54) **Gasgenerator**
Gas generator
Générateur de gaz

(30) Priorität: 25.10.1991 DE 4135299
(43) Veröffentlichungstag der Anmeldung: 28.04.1993
(73) Patentinhaber: TEMIC Bayern-Chemie Airbag GmbH, 84544 Aschau (DE)
(72) Erfinder: Högenauer, Ernst, W-8032 Lochham (DE); Schmucker, Robert, Prof. Dr., W-8012 Ottobrunn (DE)
(74) Vertreter: Maute, Hans-Jürgen, Dipl.-Ing.

(56) Entgegenhaltungen:
- US-A- 3 985 076
- US-A- 4 131 299
- US-A- 4 561 675
- PATENT ABSTRACTS OF JAPAN 19. August 1992 & JP-A-04 129 859 (ASAHI CHEM IND CO LTD) 30. April 1992

## Beschreibung

Die Erfindung betrifft einen Gasgenerator in Leichtbauweise, insbesondere eines Aufprallschutzsystems für Fahrzeuginsassen gemäß dem Oberbegriff des Patentanspruchs 1.

In den relativ früh veröffentlichten europäischen Patentanmeldungen 12626 und 12627 sind Gasgeneratoren beschrieben und dargestellt mit einem schalenförmigen Unterteil und einem damit verschraubten Oberteil und zwischen diesen beiden Hauptteilen Anzünder, Treibstoffbrennkammer und Filtermittel.

Offenbar hat sich diese Bauweise nicht bewährt, denn in jüngeren Anmeldungen wie der EP 0 180 408 A1 und in der DE 29 15 202 A1 wurden stoffschlüssige Verbindungen insbesondere durch Reibschweißen oder Elektronenstrahlschweißen bevorzugt, um eine untere Gehäuseschale mit dem Oberteil zu verbinden.

US-A- 4 561 675 zeigt einen reibgeschweißten Gasgenerator aus Aluminium. Dieses Dokument bildet den Oberbegriff des Anspruchs 1.

Bei den bekannten Schraubverbindungen liegt das Gewinde außen, was nachteilig ist.

Die bekannten Schweißverbindungen sind dicht und druckfest, sie erfordern jedoch einen erheblichen Aufwand bei der Fertigung.

Aufgabe der Erfindung ist es, einen Gasgenerator in der Bauweise gemäß dem Oberbegriff von Patentanspruch 1 dahingehend zu verbessern, daß einerseits eine bedeutend kostengünstigere Serienfertigung möglich ist andererseits jedoch bezüglich der Funktionstüchtigkeit eines solchen Gasgenerators keine Abstriche erfolgen.

Einer der wesentlichsten Vorteile der Erfindung ist, daß nunmehr bei der Erfindung nur noch 2 Hauptteile zu montieren sind, nämlich:
1. Eine Unterschale mit zwei innenliegenden Schraubgewindeteilen.
2. Einen Deckel, bzw. eine Oberschale mit zwei mit den Schraubgewindeteilen der Unterschale zusammenwirkenden Schraubgewindeteilen, wobei beim Verbinden der beiden Hauptteile eine kraft- und formschlüssige Verbindung durch das Gegeneinanderverschrauben derart entsteht, daß diese beiden Hauptteile zwischen sich im Zentral bereich den Anzünder aufnehmen, in einem diesen umgebenden, im wesentlichen ringförmigen Bereich den Treibstoff und in einem wiederum diesen peripher umgebenden, im wesentlichen ringförmigen Bereich ein Filter festhalten.

Zusätzlich wird - hiermit kombiniert - in Strömungsrichtung hinter der Treibstoffbrennkammer und vor dem Filter, der die Austrittsöffnungen zum Verbraucher bedeckt, eine zyklonbildende Leitblechanordnung eingesetzt und festgehalten.

Aus- und Weiterbildungen der Erfindung sind weiteren Ansprüchen sowie der Beschreibung und Zeichnung eines Ausführungsbeispiels zu entnehmen.

Abwandlungen dieser Ausführungsbeispiele kann der Fachmann im Rahmen seines Wissens ohne weiteres vornehmen.

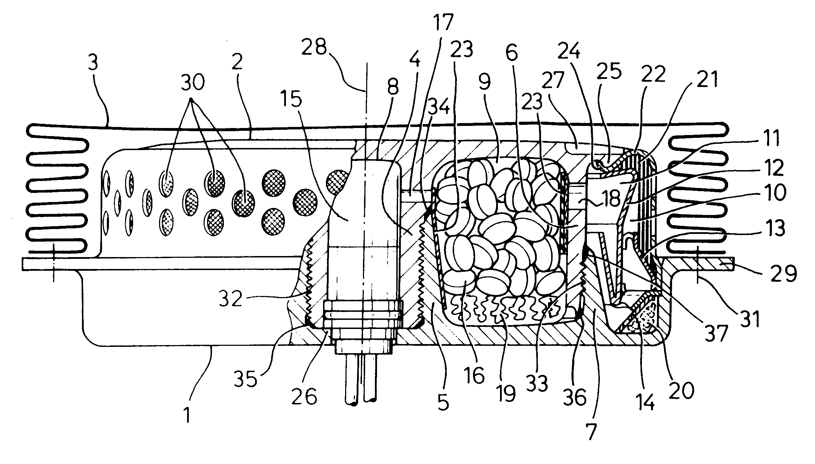

Wie der einzigen Figur der Zeichnung zu entnehmen, enthält der Gasgenerator folgendes:
Er weist zwei Hauptteile 1 und 2 im wesentlichen in Schalenform auf, wovon die Unterschale den Boden des Gasgenerators enthält und die Oberschale den Deckel bildet oder enthält. Von außen betrachtet, z.B. in Draufsicht, handelt es sich dabei um kreisförmige Scheiben. Innen bilden die Unterschale und die Oberschale mittels stegförmiger Teile 4 und 5 und/oder 6 und 7 konzentrische Kreise derart, daß im Zentral bereich eine Kammer 8 für den Anzünder gebildet ist und im nächsten ringförmigen Bereich, der diesen Zentral bereich umgibt, eine Kammer 9 zur Aufnahme des Treibstoffs, die zugleich nach dem Anzünden als Brennkammer dient.

Am Umfang außenliegend bilden die Hauptteile 1 und 2 zwischen sich noch eine Filterkammer 10 und dieser vorgeschaltet eine Leitblechanordnung zum Erzeugen einer Zwangsströmung oder Führung für das Treibgas zum Aufblasen des Verbrauchers. Die Leitblechanordnung ist insgesamt mit 11 bezeichnet und bildet ein Zyklon. Sie enthält einzelne Bleche 12, 13 und 14 zueinander passend und zusammenwirkend um diese nach dem Zusammenbau zwischen den Teilen 1 und 2 festzuhalten, in der Weise, daß die gewünschte Zwangsströmung einerseits und Filterwirkung andererseits entsteht. Nach dem Zusammenbau wird der Gassack 3 an einem Flansch 29 mittels Schrauben 31 miteinander und am Lenkrad befestigt.

Mit 15 ist der Anzünder und mit 16 der Festtreibstoff - hier in Tablettenform dargestellt - bezeichnet. Der Anzünder 15 ist bekannter Art und nach außen hin mit einer elektrischen Schaltung verbunden, die ihm im Falle eines Aufpralls/Unfalls ein Auslösesignal gibt, so daß dieser dann über Durchtrittsöffnungen 17 den Treibstoff 16 entzündet, welcher in der Brennkammer 9 abbrennt und sein Treibgas über Durchtrittsöffnungen 18 und über die Leitblechanordnung 11 an die Filterkammer 10 abgibt, bevor es zum Verbraucher, wie z.B. einem Gassack 3, austritt. Statt eines Gassacks/Airbags kann auch ein Gurtstraffer oder ein anderes Schutzsystem oder ähnliches aufgeblasen werden. Die Übertrittsöffnungen 17 und 18 sind hierbei mit Vorteil von Dicht- und Berstfolien abgedeckt, welche den Übertritt erst bei einem bestimmten Druck ermöglichen. Im Ruhezustand dienen diese Folien zur jahrelangen einwandfreien Abdichtung. In der Brennkammer 9 kann der Treibstoff 16 entweder in loser Schüttung eingebracht werden und dann z.B. mittels Maschendraht 19 ein Volumenausgleich für die nicht vollständige Schüttung mit Treibstoff geschaffen werden. Die Leitbleche der Leitblechanordnung 11, nämlich 12, 13 und 14 sind als bevorzugt dünne Stahlbleche ausgeführt und bilden einerseits ein Zyklon, welches eine Zwangsführung für das Treibgas in gewünschter Weise herbei führt, so daß nicht nur eine mehrfache Strömungsumlenkung erfolgt, sondern auch ein Abtrennen von kleinen Partikeln, In dem in der Zeichnung rechts unten dargestellten schrägen Teilraum, welcher daher eine Schmutzpartikelsammelkammer 20 darstellt. Das Leitblech 13 grenzt an diesen Sammelraum an und hält die Blechteile 12 und 14 auf Abstand zueinander für eine ausreichend entspannte Gasströmung in und durch das Filterpaket 21. Dies ist bevorzugt ebenfalls ein bekanntes Metalldraht-Gelege, -Gestricke, -Gewirke etc. und wird in seiner Endlage festgehalten von einem Stahlteil 22, ebenfalls als dünnes Blechteil ausgeführt, das sich einerseits an der Unterschale 1 abstützt und andererseits bei 24 einen Wulst 25, der am Deckel 2 umlaufen kann, hintergreift. Durch diese Ausgestaltung ist es möglich, durch Zusammenschrauben der beiden Hauptteile 1 und 2 alle weiteren Teile zwischen sich festzuhalten, insbesondere einzuklemmen und zwar im Ruhezustand gasdicht, soweit es den Anzünder und den Treibstoff betrifft. Der Anzünder wird dabei gemäß Darstellung von der Oberseite eingeschoben und von dem Deckel an einen Ansatz 26 bei der Montage an Teil 1 festgeklemmt.

Die Hauptteile 1, 2 bestehen aus Leichtmetall, bevorzugt Aluminium oder einer Aluminiumlegierung, und sind bevorzugt einstückig im Spritzguß hergestellt. Das Spritzgießen erfolgt unter Vakuum in eine gewünschte Form.

Dabei sind die Stege der Unterschale 5 und 7 so ausgeführt, daß sie mit Stegen 4 und 6 am Deckel korrespondieren. Sie weisen einander zugekehrte Gewinde auf, die zusammenschraubbar sind, zwecks kraftschlüssiger Fixierung, wobei sich das entsprechende spitze Ende der Stege 5 und 7 bzw. 4 und 6 als Dichtlippe in das Material der Gegenringe hineinquetscht. Die Montage erfolgt beim Verschrauben nach dem Einsetzen des Anzünders für Treibstoff sowie Leitblechanordnung und Filterpaket derart, daß Unterschale und Oberschale gegeneinander verdreht werden bzw. die Unterschale eingespannt wird und die Oberschale bzw. der Deckel an peripheren radialen Ausnehmungen 27 gedreht wird um die Mittelachse 28 beider Hauptteile, welche zugleich die Drehachse für die Schraubgewinde 32, 33 bildet. Wie bereits oben ausgeführt befinden sich die Stege 4 bis 7 auf konzentrischen Kreisen um diese Mittelachse 28. Bei der Montage wird also die Kraft an den peripher äußeren Ausnehmungen 27 eingeleitet zum Zusammenschrauben, so daß alle Teile zwischen den Hauptteilen 1 und 2 dicht und druckfest eingespannt werden. Diese Verschraubung ist also mit Hilfe eines einzigen Arbeitsganges durchführbar. Weitere Arbeitsgänge sind nicht notwendig. Die Unterschale 1 beinhaltet zugleich einen Flansch 29 zur Montage des Gasgenerators z.B. im Lenkrad eines Fahrzeuges, wenn dieser für den Schutz eines Fahrers dienen soll (Airbag).

Die Erfindung ist jedoch nicht auf diese Anwendung beschränkt.

In der Zeichnung des Ausführungsbeispiels ist oberhalb dieses Flansches 29 peripher außen ersichtlich, daß das Stahlblechteil 22, welches das Filterpaket hält, mit einer Lochanordnung 30 versehen ist, wobei diese Löcher 30 die Austrittsöffnungen für das Treibgas darstellen, da- mit diese ein ungehindertes Aufblasen des Verbrauchers ermöglichen. In der Zeichnung sind noch die korrespondierenden Schraubgewinde mit 32 und 33 bezeichnet und die sich ineinanderpressenden spitzzulaufenden Enden der Stege 4 bis 7 insbesondere dichtlippenartig einander entgegengesetzt angeordnet und mit 34 und 35 bzw. 36 und 37 bezeichnet.

Abwandlungen der oben angegebenen Ausführungsbeispiele sind selbstverständlich möglich und insbesondere auch Kombinationen der beschriebenen, dargestellten und beanspruchten Merkmale. Abwandlungen sind auch möglich bezüglich der Art und Ausführung des Anzünders des Treibstoffs und der Filterkammer mit Leitanordnung.

Insbesondere kann das Anzündmittel, welches mit der Zündpille oder einem anderen elektrischen Anzünder in Kontakt kommt, nach Wunsch gewählt werden. Gleiches gilt für den Treibstoff und seine Packung (nicht nur lose Schüttung). Auch die Filtermittel können nicht nur in der dargestellten Art und Weise ausgeführt werden, sondern vielfältig abgewandelt werden, auch in Kombination mit an sich bekannten Mitteln.

Die Leitanordnung kann auch eine andere Form einnehmen, jedoch sollte eine Zwangsströmung herbeigeführt werden derart, daß das Treibgas auf dem Weg zum Filter sich entspannt, dabei Partikel abtrennen kann und zugleich eine Temperatur- und Lärmminderung erfolgt.

Wesentlich ist, daß die Kammern zwischen konzentrischen Teilen innen zwischen den Schalen gebildet werden und zwar so, daß sie im Ruhezustand lange und ausdauernd dicht und festhalten. Dies wird durch die kraftschlüssige Verbindung/alleinige Schraubverbindung mit gleichzeitiger gegenseitiger Verklemmung oder Verquetschung erreicht. Auch hier sind Abwandlungen in der Form und Anordnung der Stege 4 - 7 möglich.

### Bezugszeichenliste:

- 1: Unterschale
- 2: Oberschale/Deckel
- 3: Gassack/airbag
- 4 u. 6: Schraubgewindeteil v2 ''
- 5 u. 7 '' v.1 ,8: Zentralbereich f.15,
- 9: Brennkammer,
- 10: Filterkammer
- 11: Zyklon mit
- 12,13,14: Leitblech,
- 15: Anzünder,
- 16: Treibstoff,
- 17, 18: Übertritte
- 19: Volumenausgleichsmaterial
- 20: Sammelraum f.Partikel aus Treibgas
- 21: Filterpaket
- 22: Halteblech
- 23: Folie z. Abdichten f.17,18
- 24: Kralle v. 22 z.Anlage an
- 25: umlaufender Wulst
- 26: Ausnehmungen f.d.Einleiten v.KraftfSchrauben
- 28: Mittelachse = Drehachse f. 32,33
- 29: Flansch v. 1 z.Befestigen am Lenkrad zus. mit 3
- 30: Austrittsöffnungen f.Treibgas nach 3
- 31: Befestigungsmittel f.29
- 32, 33: Schraubgewinde
- 34-37: spitz zulaufende "Dichtlippe"

## Patentansprüche

1. Gasgenerator in Leichtbauweise, insbesondere eines Aufprallschutzsystems für Fahrzeuginsassen, enthaltend einen zentralen Bereich mit einem Anzünder (8) für eine angrenzende, diesen umschließende Treibstoffbrennkammer (9), nach außen begrenzt von einer Filterkammer (10) mit Austrittsöffnungen (30) für das Treibgas zu dem, dem Gasgenerator nachgeschalteten Verbraucher, wobei eine Gehäuseschale mit einem Deckel verbunden wird, wobei Gehäuseschale (1) und Deckel (2) einstückig sind und aus Leichtmetall bestehen und wobei sie dicht und druckfest miteinander verbunden werden und dabei zwischen sich Anzünder (15), Treibstoff (16) und Filter (21) aufnehmen und festhalten, **dadurch gekennzeichnet**, daß Gehäuseschale und Deckel innenliegende Schraubgewindeteile (4,6; 5,7) aufweisen, die so gegeneinander verschraubt werden daß Kraftschluß sowohl durch das Gewinde (32,33) als auch durch die Anpressung der spitz zulaufenden Schraubgewindeteile an ihr jeweiliges Gegenstück erfolgt.

2. Gasgenerator nach Anspruch 1, **dadurch gekennzeichnet**, daß der Deckel an seiner peripheren Außenseite radial angeordnete Ausnehmungen aufweist, mittels denen die zur Verschraubung der Gewindeteile nötige Kraft einleitbar ist.

3. Gasgenerator nach einem der vorhergehenden Ansprüche, **dadurch gekennzeichnet**, daß Schale und Deckel im äußeren Umfangsbereich zwischen sich ein Filterpaket und zugleich Leitbleche festhalten, durch die sich eine Zwangsströmung einstellt.

4. Gasgenerator nach Anspruch 3, **dadurch gekennzeichnet**, daß die Leitbleche so geformt sind, daß sie ein Zyklon bilden.

## Claims

1. Gas generator of the lightweight type, in particular of an impact protection system for vehicle passengers, comprising a central region with an igniter (8) for an adjacent fuel combustion chamber (9), which surrounds the latter and is externally defined by a filter chamber (10) with outlet openings (30) for the fuel gas to the consuming device disposed downstream of the gas generator, wherein a housing shell is connected to a cover, and the housing shell (1) and the cover (2) are formed in one piece, consist of light metal and are connected together in a tight and pressure-resistant manner, accommodating and retaining the igniter (15), the fuel (16) and the filter (21) between them, characterised in that the housing shell and the cover comprise internal screw thread parts (4, 6; 5, 7) which are screwed together so as to produce a frictional connection both through the thread (32, 33) and through the pressure of the tapered screw thread parts against their respective counterpart.

2. Gas generator according to claim 1, characterised in that the cover comprises radially arranged recesses at its peripheral outer surface, by means of which recesses the force required to screw together the threaded parts can be introduced.

3. Gas generator according to any one of the preceding claims, characterised in that the shell and the cover retain between them both a filter pack and baffle plates, by means of which a forced flow is produced, in the outer circumferential region.

4. Gas generator according to claim 3, characterised in that the baffle plates are shaped so as to produce a cyclone.

## Revendications

1. Générateur de gaz de construction légère, en particulier pour un système anti-collision pour les passagers d'un véhicule, comportant une région centrale (8) avec un allumeur (15) pour une chambre de combustion (9) limitrophe entourant celle-ci, délimitée vers l'extérieur par une chambre filtrante (10) avec des ouvertures de sortie (30) pour le gaz propulseur vers le récepteur agencé en aval du générateur de gaz, une coque de boîtier étant reliée à un couvercle, la coque de boîtier (1) et le couvercle (2) étant réalisés en une seule pièce et constitués en un métal léger et étant reliés l'un à l'autre de façon étanche et résistante à la pression, et recevant et retenant entre eux un allumeur (15), le carburant (16), et le filtre (21), caractérisé en ce que la coque de boîtier et le couvercle présentant des éléments à pas de vis (4, 6 ; 5, 7) qui sont vissés les uns contre les autres de telle sorte qu'il s'effectue une coopération de forces aussi bien par le pas de vis (32, 33) que par le pressage des éléments pointus à pas de vis contre leur élément correspondant respectif.

2. Générateur de gaz selon la revendication 1, caractérisé en ce que le couvercle présente sur sa face extérieure périphérique des évidements agencés radialement, au moyen desquels on peut appliquer la force nécessaire pour le vissage des éléments à pas de vis.

3. Générateur de gaz selon l'une quelconque des revendications précédentes, caractérisé en ce que la coque et le couvercle retiennent entre eux dans la région périphérique extérieure un empilement de filtres et simultanément des tôles de guidage par l'intermédiaire desquelles il s'établit un écoulement forcé.

4. Générateur de gaz selon la revendication 3, caractérisé en ce que les tôles de guidage sont formées de telle sorte qu'elles forment un cyclone.
